# EUROPÄISCHE PATENTANMELDUNG

(11) **EP 1 952 704 A2**
(43) Veröffentlichungstag der Anmeldung: **06.08.2008**
(21) Anmeldenummer: 08008640.8
(22) Anmeldetag: 18.02.2006
(51) Int. Cl.: A23L 1/317, A22C 11/00

(54) **Verfahren zur Herstellung von Wurstwaren**

(30) Priorität: 07.03.2005 DE 102005010836; 09.06.2005 DE 102005026752
(62) Teilanmeldung aus: 06705990.7
(71) Anmelder: Fraunhofer-Gesellschaft zur Förderung der Angewandten Forschung e.V., 80686 München (DE)
(72) Erfinder: Eisner, Peter, 85354 Freising (DE); Müller, Klaus, 85356 Freising (DE); Zacherl, Christian, 85354 Freising (DE)
(74) Vertreter: Wiedemann, Markus

(57) **Zusammenfassung**

Die Erfindung betrifft ein Verfahren zur Herstellung von Wurstwaren wie Rohwürste, Brühwürste, Kochwürste oder Kochstreichwürste, wobei als einzige tierische Zutat Muskelfleisch aus dem Schlegel und/oder aus der Schulter von Schweinen und gegebenenfalls Schweineleber verwendet wird.

Die Erfindung sieht vor, dass das Muskelfleisch zusammen mit Eis zu Brät verarbeitet wird, wobei das Eis eine Temperatur kleiner als -10 °C aufweist.

## Beschreibung

### Stand der Technik

Die Erfindung betrifft ein Verfahren zur Herstellung von Wurstwaren wie Rohwürste, Brühwürste, Kochwürste oder Kochstreichwürste gemäß dem Oberbegriff von Anspruch 1 sowie nach dem Verfahren hergestellte Wurstwaren, gemäß dem Oberbegriff von Anspruch 22.

Wurstwaren (Würste und wurstartige Erzeugnisse) im herkömmlichen Sinn sind bestimmte, unter Verwendung von geschmackgebenden und/oder technologisch begründeten Zutaten zubereitete schnittfeste oder streichfähige Gemenge aus zerkleinertem Fleisch, Fettgewebe sowie sortenbezogen teilweise auch aus Innereien sowie bei besonderen Erzeugnissen auch aus sonstigen Tierkörperteilen.

Unter Fleisch werden nach der Definition in den Leitsätzen für Fleisch und Fleischerzeugnisse "alle Teile von geschlachteten oder erlegten warmblütigen Tieren, die zum Genuss für Menschen bestimmt sind". Nach dieser Definition fallen z. B. auch Knochen und Innereien unter den Begriff "Fleisch".

Bei der gewerbsmäßigen Herstellung von Wurstwaren ist "Fleisch" nur Skelettmuskulatur mit anhaftendem oder eingelagertem Fett- und Bindegewebe sowie eingelagerten Lymphknoten, Nerven, Gefäßen und Schweinespeicheldrüsen. Bei einigen Fleischerzeugnissen schließt "Fleisch" auch einen gewissen Anteil an eingewachsenen Knochen und Knorpeln ein, bei "Schweinefleisch" auch die Schwarte.

Beim Einsatz von Schweinefleisch für Wurstprodukte lassen sich je nach Zerlegung die folgenden Fleischarten unterscheiden:
· Schweinskopf,
· Schweinsbacke,
· Schweinenacken,
· Brust oder Dicke Rippe,
· Stielkotelett,
· Lendenkotelett,
· Filet,
· Schweinebauch (Schälrippe und Bauchfleisch),
· Schweineschulter (Vorderschinken),
· Schinken oder Schlegel (Oberschale, Unterschale und Nuss),
· Eisbein oder Stelze und
· Schweinsfuß.

Mit Ausnahme des Filets werden aus allen genannten Körperteilen des Schweins Wurstwaren hergestellt, wobei die Fraktionen in unterschiedlichen Verhältnissen gemischt werden. Dabei ist das Muskelfleisch je nach Körperteil mit mehr oder weniger Fett durchzogen.

Bei Würsten unterscheidet man generell Rohwürste, Brühwürste und Kochwürste. Wurstwaren gelangen geräuchert oder ungeräuchert in Hüllen oder Behältnissen oder auch ohne Hüllen in den Verkehr.

"Rohwürste" wie z.B. Salami oder Cervelatwurst sind in der Regel umgerötete, ungekühlt (über + 10°C) lagerfähige, in der Regel roh zum Verzehr gelangende Wurstwaren, die streichfähig oder nach einer mit Austrocknung verbundenen Reifung schnittfest geworden sind. Zucker wird in einer Menge von nicht mehr als 2 % zugesetzt.

"Kochwürste" wie z.B. Leberwurst sind hitzebehandelte Wurstwaren, die vorwiegend aus gekochtem Ausgangsmaterial hergestellt werden. Nur beim Überwiegen von Blut, Leber und Fettgewebe kann der Anteil an rohem Ausgangsmaterial vorherrschen. Kochwürste sind in der Regel nur im erkalteten Zustand schnittfähig.

"Brühwürste" wie z.B. Wiener oder Lyoner sind durch Brühen, Backen, Braten oder auf andere Weise hitzebehandelte Wurstwaren, bei denen zerkleinertes rohes Fleisch mit Fett, Kochsalz und ggf. anderen technologisch notwendigen Salzen meist unter Zusatz von Trinkwasser ganz oder teilweise aufgeschlossen wurde und deren Muskeleiweiß bei der Hitzebehandlung mehr oder weniger zusammenhängend koaguliert ist, so dass die Erzeugnisse bei etwaigem erneuten Erhitzen schnittfest bleiben. Die Menge des verwendeten Trinkwassers ist bei den einzelnen Wurstsorten unterschiedlich. Bezogen auf Fleisch und Fett wird anstelle von Trinkwasser teilweise bis zu 10 % Blutplasma oder Blutserum zugesetzt; der Ersatz von Trinkwasser durch 5 % Milch ist auf zum Braten bestimmte ungeräucherte Würste, deren Brät fein zerkleinert ist, beschränkt.

Bekannte Brühwürste enthalten im Mittel etwa 50 % Fleisch, 25 % Fett und 25 % Wasser. Zur Herstellung ,werden Fleisch und Speck zuerst mit dem Fleischwolf zerkleinert und bei den meisten Sorten anschließend zu dem sog. Brät gekuttert. Ein Kutter besteht aus einem sich drehenden Gefäß (Schüssel), in dem mehrere Messer mit sehr hoher Geschwindigkeit rotieren. Dabei werden die Zutaten so weit zerkleinert, dass ein Brei entsteht, bei rohem Fleisch Brät genannt.

Im Kutter werden die Proteine durch 1,5 bis 2 % Kochsalz teilweise gelöst und gequollen, gleichzeitig wird ein konservierender Effekt erzielt. Neben Gewürzen werden meist noch Nitritpökelsalz und Kutterhilfsmittel zugegeben. Nach dem Kuttern folgt das Abfüllen des Bräts in Därme, gegebenenfalls das Räuchern, und der Namensgebende Schritt - das Brühen. Das Brät erfährt dabei eine Kerntemperatur, bei der die Proteine der Muskelfasern unter Gelbildung gerinnen.

Die Konsistenz einer Brühwurst ist abhängig vom Wasserbindungsvermögen, daher ist dieses neben der Fettemulgierung und -Stabilisierung und Strukturbildung (Gelbildung) ein entscheidender Faktor bei der Brühwurst-Herstellung.

Durch Zugabe von Fett in den Kutter entsteht bei der Brühwurstherstellung eine Emulsion. An der Phasengrenze lagern sich die hydrophoben Proteinsequenzen an und tragen zu einer Ausrichtung der Proteine und zu einer teilweisen Fraktionierung der Proteine bei. In der das Fett umgebenden Protein-Wassermischung reichem sich hydrophile Gruppen, gut wasserlösliche und gut vernetzbare Proteine an, die im nachfolgenden Brühprozess eine gute Gelbildung und hohe Wasserbindung ermöglichen.

Wenn beim Kuttern nur wenig Fett zur Verfügung steht, kann dieser Fraktionierungsvorgang nicht ablaufen. Infolge dessen wird die Gelbildung und Wasserbindung in der Protein-Wasser-Mischung reduziert. Der Fettgehalt in bekannten Brühwürsten liegt je nach Anwendung und Rezeptur zwischen 15 und 30 Gew% im fertigen Produkt. Mit diesem Fettgehalt kann eine feste und geschmeidige Textur und ein ansprechender Geschmack in der fertigen Wurst erzielt werden.

Demgegenüber fettreduzierte Brühwurstwaren gibt es am Markt bereits in vielen Variationen (Fettgehalt 5% bis 19%). Diese enthalten meist Geflügelfleisch oder mehr oder weniger fettes Fleisch aus verschiedenen Körperteilen vom Rind oder vom Schwein. Durch den geringen Fettgehalt wirken die am Markt bekannten fettarmen Produkte meist trocken, bröckelig und haben keinen frischen, fleischigen Geschmack. Die sensorischen Nachteile des Fettmangels werden deshalb in vielen Wurstsorten durch die Zugabe von Pflanzenölen oder ölbasierten Fettersatzstoffen kompensiert. Jedoch gelang es bislang nicht, eine fettarme Brühwurst mit ansprechenden sensorischen Eigenschaften herzustellen.

Darüber hinaus haben aufgrund der Vielzahl der üblicherweise eingebrachten tierischen Fraktionen (Muskelfleisch, Schwarten, Fett, Bindegewebe, Teile von Innereien, Lymphknoten, Nerven, Gefäßen und Schweinespeicheldrüsen z.T. auch Separatorenfleisch aus Tierkörperverwertungsbetrieben) Wurstwaren beim Verbraucher oft einen negativen Ruf.

### Aufgabe

Aufgabe der vorliegenden Erfindung ist es, ein Verfahren zur Herstellung von Wurstwaren sowie Wurstwaren der eingangs erwähnten Art derart weiter zu entwickeln, dass die aus dem Verfahren entstandenen Wurstwaren ein saftiges und geschmeidiges Mundgefühl und ein frischer und fleischiger Geschmack erreicht werden soll.

Erfindungsgemäß wird diese Aufgabe durch die Merkmale von Anspruch 1 gelöst. Anspruch 22 betrifft nach dem Verfahren hergestellte Wurstwaren.

### Offenbarung der Erfindung

Vor dem Hintergrund der Fitnesswelle in den reicheren Ländern gewinnen fettreduzierte Produkte immer mehr an Bedeutung. Fettreduzierte Wurstwaren gibt es bereits in vielen Variationen am Markt. Diese enthalten meist mehr oder weniger fettes Fleisch aus verschiedenen Körperteilen vom Rind, vom Schwein oder von Geflügel. Der Verbraucher ist somit bei den bekannten mageren Wurstsorten nicht in der Lage, die Herkunft der tierischen Zutaten nachzuvollziehen. Die Verwendung von definierten Körperteilen eines Tieres zur Wurstproduktion als einzige Zutat tierischen Ursprungs ist bisher nicht bekannt.

Wenn zur Wurstherstellung nur reines Muskelfleisch aus der Schulter und/oder dem Schlegel (Schinken) vom Schwein und bei der Herstellung von Leberwurst lediglich zusätzlich Schweineleber als alleinige tierische Zutaten und ansonsten kein anderes Fleisch und keine weiteren tierischen Zutaten wie Schwarten, Speck, Innereien, Separatorenfleisch oder andere tierische Körperteile oder Milch- bzw. Eiproteine oder auch keine pflanzlichen Fette oder Öle oder ölbasierte Fettersatzstoffe verwendet werden, ergibt sich zum einen eine sehr fettarme Wurst.

Der Fettgehalt des Muskelfleischs beträgt vorzugsweise weniger als 5 Gew.-%, insbesondere weniger als 3,5 Gew.-% bezogen auf die Gesamtmasse des Muskelfleischs. Dies kann, falls nötig, durch wenigstens teilweises Entfernen des Fettrandes vom Schlegel und/oder von der Schulter erzielt werden.

Zum andern gewährleisten Wurstwaren, die nur aus einer einzigen Fraktion vom Schwein bestehen, neben ihrer für die Muskelpartien spezifischen technologischen Eigenschaften, dem Verbraucher den größtmöglichen Verbraucherschutz im Hinblick auf die Reinheit des Produkts. Schinken- oder Schulterfleisch vom Schwein genießt bei Verbrauchern gerade im Hinblick auf die am Markt erhältlichen Schinkenspezialitäten hoher Qualität ein positives Ansehen als hochwertiges Lebensmittel. Schinkenfleisch aus dem Schlegel oder der Schulter ist nach Abtrennen des Fettrandes sehr fettarm (2 % bis 5 % Fett, gemessen nach Soxhlet-Verfahren), proteinreich und wird vom Verbraucher deshalb als gesundes Lebensmittel geschätzt.

Besonders fettreduzierte Wurstsorten können erhalten werden, wenn das verwendete Muskelfleisch aus dem Schlegel stammt (Nuss, Ober- oder Unterschale). Besondere Vorteile bietet die ausschließliche Verwendung von Fleisch aus der Nuss, welches vor der Herstellung der Wurst von äußeren Fetträndern befreit wurde.

Als weitere Zutaten können der Wurst Gewürze, Gemüse und andere pflanzliche Zutaten oder auch Zusatzstoffe zugegeben werden, die aus anderen Lebensmitteln bekannt sind. Wesentlich dabei ist jedoch, dass keine pflanzlichen Fette und Öle oder ölbasierte Fettersatzbestandteile wie etwa Olestra oder Salatrim zugegeben werden.

Mit dem Verfahren hergestellte Wurstwaren weisen infolgedessen einen Fettgehalt von weniger als 5 Gew.-%, insbesondere von weniger als 3,5 Gew.-% bezogen auf die Gesamtmasse der Wurst auf.

Zur Erzielung besonders ansprechender sensorischer Eigenschaften werden für die rein schweinefleischbasierten Wurstwaren gemäß der Erfindung weitere Verfahrenschritte bevorzugt durchgeführt, welche in der nachfolgenden Beschreibung von Ausführungsbeispielen detailliert wiedergegeben sind.

### Beschreibung von Ausführungsbeispielen

### Brühwurst

Zur Herstellung einer Brühwurst gemäß der Erfindung wird nur mageres Muskelfleisch, vorzugsweise aus der Schulter und/oder dem Schlegel, besonders bevorzugt aus der Nuss vom Schwein verarbeitet. Unter magerem Muskelfleisch soll Fleisch mit einem Fettgehalt von vorzugsweise weniger als 5 Gew.-%, insbesondere weniger als 3,5 Gew.-% bezogen auf die Gesamtmasse des Muskelfleischs verstanden werden.

Beim Kuttern muss die Brätmasse stets gut gekühlt sein, damit das Muskelprotein nicht vorzeitig durch Hitzeschädigung die Funktionalität verliert. Dazu dient eine Zugabe von Eis oder Eiswasser. In der Literatur sind auch Verfahren bekannt, bei denen zur weiteren Kühlung flüssiger Stickstoff oder Trockeneis zugegeben werden. Derartig hochpreisige Hilfsstoffe machen den Herstellungsprozess aber unwirtschaftlich.

Während des Kuttervorgangs wird durch die Zugabe von Eis eine Energiemenge von größer 120 kJ/kg Brät, vorteilhaft größer 150 kJ/kg, besonders vorteilhaft größer 250 kJ/kg Brät bis zum Erreichen einer Brät-Temperatur von 0°C in das Brät eingebracht. Dabei wird Eis vorzugsweise auf Werte kleiner -10 °C (vorteilhaft kleiner -20 °C, bes. vorteilhaft kleiner -40 °C) heruntergekühlt, um einen weitgehenden Proteinaufschluss bei sehr geringen Temperaturen zu erreichen. Besonders vorteilhaft erfolgt der Aufschluss, wenn die gesamte Eismenge direkt am Anfang des Kuttervorgangs zugesetzt wird.

Die benötigte Kältemenge kann entweder durch ein sehr weit gekühltes Eis in geringerer Menge erreicht werden oder durch Zugabe von mehr Eis bei weniger tiefen Temperaturen. Von besonderem Vorteil ist die Gabe von mindestens 30 Gew.%, besonders vorteilhaft größer 35 Gew.-% Eis bezogen auf die Gesamtbrätmasse, da ein hoher gebundener Wassergehalt zu einem saftigen und weichen Mundgefühl der fertigen Wurst beiträgt.

Von besonderem Vorteil ist die Gabe von Eis mit sehr niedrigen Temperaturen, so dass durch den stattfindenden Temperaturausgleich mindestens 20 Gew.-%, besonders vorteilhaft mind. 50 Gew.-% des im Fleisch befindlichen Wassers gefriert. Dadurch entsteht eine zweite Eisphase. Beide Eisphasen ermöglichen in Kombination mit den Scherkräften des Kuttermessers einen besonders hohen Energieeintrag pro Zeiteinheit in das Brät, was den Proteinaufschluss wesentlich verbessert.

Überraschenderweise bindet bei derartigen Verfahrensbedingungen Muskelprotein aus dem Schlegel um mehr als 12% und aus der Schulter um mehr als 8% mehr Wasser in die Wurst als Gel ein, als dies z.B. mit Proteinen aus anderen mageren Muskelgruppen wie Filet oder Kotelett erreicht wird. Somit stellt eine ausreichende Kältezufuhr bei Verwendung von magerem Schlegel- oder Schulterfleisch eine ideale Kombination für die Herstellung von sensorisch ansprechenden fettarmen Wurstwaren mit hohem Wassergehalt dar.

Die Nutzung von Fleisch aus dem Schlegel oder der Schulter bietet weitere Vorteile. Wenn es aus sensorischen Gründen erwünscht ist, kann der Fettgehalt der Wurst durch wenigstens teilweises Belassen eines Fettrandes der Muskeln aus Schlegel oder Schulter zur Einstellung des Fettgehaltes genutzt werden. Es zeigt sich, dass sich das am Schlegel befindliche Fett besonders gut mit Schlegelmuskelprotein zu einer Emulsion verarbeiten lässt.

Durch das erfindungsgemäße Verfahren steht für eine lange Zeitspanne eine Brät-Temperatur kleiner 0°C zum Aufschluss und zur Freilegung von ausgeprägt techno-funktionellen Proteinsequenzen zur Verfügung. Die niedrige Temperaturführung für einen langen Zeitraum ermöglicht es, das hochwertige Protein am Gefrierpunkt des Fleisches aus der Muskelmatrix zu lösen, dabei weitgehend aufzuschließen und somit eine hervorragende Wasserbindung und Gelbildung der Proteine zu erzielen. Zur besseren Konsistenz und zur weiteren Verbesserung der Gelbildung wird die Temperatur am Ende des Kuttervorgangs auf Werte bis maximal 10 °C, vorteilhaft bis maximal 8 °C angehoben.

Es kann zur Verbesserung der Gelbildung aber in Einzelfällen auch von Vorteil sein, bis zur Erreichung der Brühtemperatur (größer 60°C) eine Zeitspanne von mehr als 3 Stunden, besser mehr als 5 Stunden verstreichen zu lassen. Es zeigt sich, dass durch eine lange Zwischenlagerung vor dem Brühen der Wasseraustritt während des Brühvorgangs minimiert wird. Diese vorteilhaften Effekte bei der Zwischenlagerung können durch ein Anheben der Brättemperatur auf Werte größer 20 °C, besser größer 35 °C noch verbessert werden. Im Ergebnis kann eine deutlich festere Struktur bei gleichem Wassergehalt erzielt werden.

Durch dieses Verfahren wird es ermöglicht, im Brät einen Fremdwasseranteil von bis zu 45 Gew.-% zu erreichen, ohne dass im Anschluss an den Brühvorgang Wasser aus der Wurst austritt.

Der Vorteil der Verwendung von Eis als Kältequelle liegt in den vergleichsweise niedrigen Kosten im Vergleich zum Einsatz von flüssigem Stickstoff oder Trockeneis.

Somit wird ein sensorisch sehr ansprechendes Wurstprodukt erhalten, obwohl der Fettgehalt in der fertigen Wurst bis auf Werte kleiner 2,5 Gew.-% reduziert wird. Das Produkt unterscheidet sich hinsichtlich Sensorik stark von herkömmlichen fettreduzierten Wurstwaren und ist hinsichtlich des Mundgefühls kaum von stärker fetthaltigen Wurstwaren des Stands der Technik zu unterscheiden.

Es kann in Einzelfällen auch von Vorteil sein, das Fleisch vor der Zugabe in den Kutter einzufrieren um weitere Kälte für den Kutterprozess zur Verfügung zu stellen. Dabei geht zwar die Muskelstruktur teilweise verloren, jedoch kann die Aufschlusszeit weiter verlängert und die Brätkonsistenz weiter homogenisiert werden.

Eine besonders fettarme Brühwurst wird erhalten, wenn der Wasseranteil durch Zugabe von Hydrokolloiden weiter gesteigert wird. Als Hydrokolloide können alle verdickend wirkenden Stoffe eingesetzt werden, die im LMBG zugelassen sind. Durch die Gabe von Hydrokolloiden auf Kohlehydratbasis (z.B. Xanthan, Johannisbrotkernmehl) wird die Brätviskosität derart erhöht, dass es gelingt, bis zu 50 Gew.-% an Fremdwasser in die Wurst einzubringen.

Die Zugabe von mehr Fremdwasser ermöglicht die Gabe von mehr Eis in den Prozess, so dass das Brät besonders lange gekuttert werden kann und das Muskelprotein besonders weit aufgeschlossen wird. Es kann vorteilhaft sein, die Hydrokolloide in Wasser zu lösen, die Lösung einzufrieren und zusammen mit dem Eis in den Kutter zugeben. So kann die Kutterzeit (und damit die Aufschlusszeit der strukturgebenden Proteinfraktionen) maximiert werden.

In einer besonders vorteilhaften Ausgestaltung wird dem Brät Pflanzenprotein zugegeben, um die Gelfestigkeit der Wurst weiter zu steigern. Besonders vorteilhaft ist die Gabe von bis zu 3 Gew.-% an Leguminosenprotein (z.B. aus Erbse, Soja, Lupine, Ackerbohne). Es ist auch der Einsatz anderer Pflanzenproteine möglich. Der Zusatz der pflanzlichen Proteine erfolgt besonders vorteilhaft in Form einer tiefgefrorenen Proteinlösung. Somit liegt bereits gut gelöstes Protein für die Verarbeitung vor. Gleichzeitig wird in Form der gefrorenen Proteinlösung zusätzliche Kälte in das System eingetragen.

Es ist von Vorteil, das Fleisch vor dem Kuttervorgang zu wolfen und auf Werte kleiner 0°C anzufrieren, wobei mehr als 10%, des sich im Fleisch befindlichen gefrierbaren Wassers anzufrieren ist. Ebenso ist es von Vorteil, wenn der Kutter vor und/oder während der Brätherstellung auf Werte kleiner 5°C, besser kleiner 1°C, gekühlt wird.

Eine besonders einfache und wirtschaftliche Prozessführung wird erreicht, wenn die verwendeten Muskelgruppen von dem Kuttern nicht durch Wolfen zerkleinert werden. Die hohe Gabe an Eis schließt auch Fleischstücke mit Durchmessern von größer 5 cm schnell auf.

Bei der Herstellung des Wurstbräts sind die Geometrie sowie Geschwindigkeiten von Kuttermesser von entscheidender Bedeutung. Dabei ist die Scherrate der entscheidende Parameter, der sich aus der Umlaufgeschwindigkeit des Kuttermessers und der Spaltweite zwischen Messer und Kutterschüssel ergibt. Oberhalb von Scherraten 25.000 1/s, verbessern sich die Bräteigenschaften durch verbesserten Proteinaufschluss. Oberhalb von 60.000 1/s verschlechtern sich die Bräteigenschaften jedoch durch vermehrte Proteinschädigung aufgrund von partiellen Temperaturspitzen wieder. Es ergibt sich somit ein Optimum der Scherrate für den Proteinaufschluss zwischen 50.000 und 60.000 1/s. Der Einsatz von speziellen, für den Eiweißaufschluss abgestumpften Kuttermessern ermöglicht einen besonders gleichmäßigen Aufschluss.

Die angegebenen Scherraten können sowohl durch Kutter, als auch in anderen großtechnischen Fleischaufschlussmaschinen, zum Beispiel Kolloidmühlen eingestellt werden.

Mit dem oben beschriebenen Verfahren wird eine Grundbrätmasse geschaffen, aus der durch weitere Verarbeitung verschiedene Wurstwaren wie Schinkenwurst, Aufschnitt mit verschiedenen Zutaten (Pistazien, Pilze, Kräuter, Gemüse) Göttinger, Frankfurter, Bratwurst, Fleischkäse oder auch Pasteten hervorgehen.

Die Struktur der Brühwurst kann durch die Zugabe von Faserprodukten verfestigt werden. Hierzu eignen sich handelsübliche Faserprodukte, zum Beispiel aus Weizen, Leguminosen oder Hafer.

Gemäß einer besonderen Ausgestaltung des Verfahrens wird der Brühvorgang bei Aufheiz- und Abkühlraten kleiner 5K/min durchgeführt.

Bioaktive Wurstprodukte können erhalten werden, wenn sekundäre Pflanzeninhaltsstoffe wie Lignane, Pytosterole, Polyphenole oder Isoflavonoide zugesetzt werden.

### Kochwurst

Aus Schlegel- und Schulterfleisch vom Schwein können auch Kochwürste mit sehr geringem Fettgehalt wie z.B. Leberwürste oder Leberpasteten hergestellt werden.

Als Zutaten für Kochwürste oder Kochstreichwürste, werden als einzige tierische Zutat reines, von einem Fettrand im wesentlichen befreites Muskelfleisch aus dem Schlegel oder der Schulter von Schweinen, vorteilhaft vom Schlegel, besonders vorteilhaft aus der Nuss und Schweineleber verwendet. Außer dem im Muskelfleisch und in der Leber enthaltenen Fett wird kein weiteres Fett wie Speck oder Öl oder ein ölbasierter Fettersatzbestandteil zugegeben.

Der Fettanteil im Muskelfleisch beträgt maximal 5 Gew.-%, bevorzugt maximal 3,5 Gew.-% und in der Schweineleber maximal 6 Gew.-%. Besonders vorteilhaft erweist sich der Einsatz frischer Schweineleber die von Gallengängen befreit ist.

Überraschenderweise zeigt sich, dass eine besonders cremige Kochwurst erreicht wird, wenn das Fleisch vor dem Kuttern nicht gekocht, sondern bei Temperaturen unter 85°C vorteilhaft unter 75°C gebrüht wird. Hierdurch werden die Proteine nur teilweise denaturiert und eine saftige Wurststruktur erhalten.

Die bevorzugte Temperatur beim Kuttern des Kochwurstbräts aus der frischen Leber und dem gebrühten Fleisch beträgt mehr als 40°C, besser mehr als 50°C. Hierdurch wird die Leber besonders gut aufgeschlossen und eine feste und cremige Struktur erzielt.

In einer vorteilhaften Ausgestaltung des erfindungsgemäßen Verfahrens werden zu Beginn des Kuttervorganges Fleisch und Leber trocken gekuttert, und erst kurz von Ende des Kuttervorganges werden die restlichen Zutaten und Wasser bzw. Brühe aus dem Brühvorgang des Fleisches zugesetzt. Zum verbesserten Aufschluss werden vergleichbare Scherraten wie bei der Herstellung von Brühwurstbrät gewählt. Diese Prozessführung ermöglicht es, auf Emulgatoren als Zusatzstoffe zu verzichten.

Die Cremigkeit in der Wurst kann verbessert werden, wenn ihr bei der Herstellung im Kutter bis zu 3 % Hydrokolloide auf Basis von Kohlehydraten zugesetzt werden. Besondere Vorteile ergeben sich beim Einsatz von Xanthan in Gew.-Anteilen von 0,5 bis 1 % bezogen auf die Gesamtmasse.

Die Cremigkeit in der Wurst kann auch verbessert werden, wenn ihr bei der Herstellung im Kutter bezogen auf die Gesamtwurstmasse bis zu 4 Gew.-% Pflanzenprotein zugegeben werden. Besonders positive Eigenschaften werden bei Verwendung von Leguminosenproteinen wie Lupinenproteinen oder Ölsaatenproteinen wie z.B. Sonnenblumenproteinen erhalten. Nach Zusatz von 3 % Lupinenprotein im Kutter werden Kochwürste, trotz des geringen Fettgehaltes von weniger als 3 % streichzart und sehr cremig. Dies gelingt besonders gut, wenn als Protein ein micellen-gefälltes Lupinenproteinisolat zum Einsatz kommt. Wenn zudem die Erhitzungstemperatur der in Därmen oder Gläsern abgefüllten Kochwurst kleiner 75 °C gehalten wird, ist das Streichverhalten besonders gut, da keine vollständige Denaturierung der Pflanzenproteine erfolgt. Der Einsatz von feuchtem Pflanzenproteinen oder gefrorener, wässriger Proteinlösung bringt besondere Vorteile, da die Proteinlöslichkeit hier besonders hoch ist.

Die Struktur der Kochwurst kann durch die Zugabe von Faserprodukten verfestigt werden. Hierzu eignen sich handelsübliche Faserprodukte, zum Beispiel aus Weizen, Leguminosen oder Hafer.

Eine cremige Struktur wird erhalten, wenn die Erhitzungstemperatur des abgefüllten Bräts gerade unterhalb der Denaturierungstemperatur der Pflanzenproteine, aber überhalb der Denaturierungstemperatur von Leber, sowie überhalb der erforderlichen Pasteurisierungstemperatur liegt.

Gemäß einer besonderen Ausgestaltung des Verfahrens zur Herstellung einer Leberwurst wird der Brühvorgang bei Aufheiz- und Abkühlraten kleiner 5K/min durchgeführt.

Bioaktive Wurstprodukte können erhalten werden, wenn sekundäre Pflanzeninhaltsstoffe wie Lignane, Pytosterole, Polyphenole oder Isoflavonoide zugesetzt werden.

### Rohwurst

Aus Schlegel- und Schulterfleisch vom Schwein können auch Rohwürste mit sehr geringem Fettgehalt und besonders nativer Proteinstruktur hergestellt werden.

Zur Herstellung von Rohwürsten wird als einzige tierische Zutat reines, von einem Fettrand im wesentlichen befreites Muskelfleisch aus dem Schlegel oder der Schulter von Schweinen, vorteilhaft vom Schlegel verwendet und außer dem im Muskelfleisch enthaltenen Fett kein weiteres Fett wie Speck oder Öl oder ein ölbasierter Fettersatzbestandteil zugegeben. Der Fettanteil im Muskelfleisch beträgt maximal 5 Gew.-%, bevorzugt maximal 3,5 Gew.-%.

Die Rohwurst aus derartig magerem Fleisch erhält eine Struktur ähnlich wie Schinken oder Lachsschinken, kann aber durch Untermischen verschiedenster Zutaten vom Geschmack und der Textur viel breiter variiert werden als Schinken.

Überraschenderweise zeigt sich, dass eine fettarme Rohwurst mit einer besonders festen, schinkenähnlichen Textur erreicht wird, wenn in der Fleischmasse vor dem Kuttervorgang nicht oder nicht mehr als 50% des maximal gefrierbaren Wassers angefroren ist.

Es zeigt sich weiterhin vorteilhaft, wenn das Fleisch zugegeben wird mit Temperaturen von weniger als 5°C, besonders vorteilhaft weniger als 1°C, jedoch nicht angefroren, d.h. nicht weniger als -2°C.

In einer besonders vorteilhaften Ausgestaltung des erfindungsgemäßen Verfahrens wird ein Teil der Fleischmasse, vorteilhaft 50 %, durch eine Scheibe mit Lochdurchmesser kleiner 4 mm gewolft. Der andere Teil wird durch eine Scheibe mit Lochdurchmesser größer 7 mm Scheibe geschroten.

Der gewolfte Anteil der Fleischmasse wird im Kutter bis zu einer Temperatur größer 12°C, besser größer 14°C bis zur Bindigkeit gekuttert. Nach 90% der Kutterzeit, besser nach Abschluss der Kutterzeit des gewolften Anteils werden Starterkulturen, Gewürze, Salz und/oder Nitritpökelsalz sowie der geschrotene Anteil des Fleisches zugegeben und untergemischt.

In einer weiteren Ausgestaltung werden Hydrokolloide auf der Basis von Kohlehydrate wie zum Beispiel Xanthan und/oder Faserprodukte wie zum Beispiel Weizenfaser oder Leguminosenfaser zugesetzt. Die Zugabe.dieser Additive kann den Reifevorgang beschleunigen und die Wasserbindung regulieren. Weiterhin können Pflanzenproteinprodukte zugesetzt werden. Weiterhin können sekundäre Pflanzeninhaltsstoffe wie zum Beispiel Lignane oder Phytosterole zugesetzt werden. Nicht zuletzt kann Gemüse, wie zu Beispiel Peperoni oder Meerrettich zugegeben werden. Schließlich kann die abgefüllte Wurstmasse geräuchert werden.

## Patentansprüche

1. Verfahren zur Herstellung von Wurstwaren wie Rohwürste, Brühwürste, Kochwürste oder Kochstreichwürste, wobei als einzige tierische Zutat Muskelfleisch aus dem Schlegel und/oder aus der Schulter von Schweinen und gegebenenfalls Schweineleber verwendet wird, **dadurch gekennzeichnet, dass** das Muskelfleisch zusammen mit Eis zu Brät verarbeitet wird, wobei das Eis eine Temperatur kleiner als -10 °C aufweist.

2. Verfahren nach Anspruch 1, **dadurch gekennzeichnet, dass** das Eis eine Temperatur kleiner als -20 °C aufweist.

3. Verfahren nach Anspruch 1 oder 2, **dadurch gekennzeichnet, dass** das Eis eine Temperatur kleiner als -40 °C aufweist.

4. Verfahren nach einem der vorhergehenden Ansprüche, **dadurch gekennzeichnet, dass** das Muskelfleisch aus der Nuss stammt.

5. Verfahren nach wenigstens einem der vorhergehenden Ansprüche, **dadurch gekennzeichnet, dass** der Fettanteil im Muskelfleisch maximal 5 Gew.-% und in der Schweineleber maximal 6 Gew.-% beträgt.

6. Verfahren nach Anspruch 5, **dadurch gekennzeichnet, dass** der Fettanteil im Muskelfleisch maximal 3,5 Gew.-% beträgt.

7. Verfahren nach Anspruch 5 oder 6, **dadurch gekennzeichnet, dass** außer dem im Muskelfleisch oder dem in der Schweineleber enthaltenen Fett kein weiteres Fett wie Speck oder Öl oder ölbasierte Fettersatzstoffe zugegeben werden.

8. Verfahren zur Herstellung einer Brühwurst nach einem der vorhergehenden Ansprüche, **dadurch gekennzeichnet, dass** durch die Zugabe von Eis eine Energiemenge von größer 120 kJ je kg Brät zum Erreichen einer Brät-Temperatur von 0°C in das Brät eingebracht wird.

9. Verfahren zur Herstellung einer Brühwurst nach einem der vorhergehenden Ansprüche, **dadurch gekennzeichnet, dass** dem Muskelfleisch eine derartige Menge an Eis zugegeben wird, dass mindestens 20 Gew.-% des im Muskelfleisch befindlichen Wassers gefriert.

10. Verfahren zur Herstellung einer Brühwurst nach einem der vorhergehenden Ansprüche, **dadurch gekennzeichnet, dass** dem Muskelfleisch eine derartige Menge an Eis zugegeben wird, dass das Eis mindestens 30 Gew.-% der Gesamtmasse an Brät aufweist.

11. Verfahren zur Herstellung einer Brühwurst nach einem der vorhergehenden Ansprüche, **dadurch gekennzeichnet, dass** das Muskelfleisch in zumindest teilweise gefrorenem Zustand zu Brät verarbeitet wird.

12. Verfahren zur Herstellung einer Brühwurst nach einem der vorhergehenden Ansprüche, **dadurch gekennzeichnet, dass** in das Brät zusätzlich Pflanzenproteine zugegeben werden.

13. Verfahren zur Herstellung einer Brühwurst nach wenigstens einem der vorhergehenden Ansprüche, **dadurch gekennzeichnet, dass** die Brätherstellung in einem Kutter oder in einer Fleischaufschlussvorrichtung erfolgt.

14. Verfahren zur Herstellung einer Brühwurst nach Anspruch 13, **dadurch gekennzeichnet, dass** der Kuttervorgang mit einer Scherrate in einem Bereich zwischen 25.000 1/s und 60.000 1/s durchgeführt wird.

15. Verfahren zur Herstellung einer Brühwurst nach einem der vorhergehenden Ansprüche, **dadurch gekennzeichnet, dass** das Brät am Ende der Brätherstellung eine Temperatur von maximal 10 °C aufweist.

16. Verfahren zur Herstellung einer Brühwurst nach einem der vorhergehenden Ansprüche, **dadurch gekennzeichnet, dass** das Brät mit einer Temperatur in einem Temperaturbereich zwischen 60°C und 80°C gebrüht wird.

17. Verfahren zur Herstellung einer Kochwurst nach wenigstens einem der Ansprüche 1 bis 7, **dadurch gekennzeichnet, dass** dem Brät maximal 4 Gew.-% Pflanzenprotein zugegeben wird.

18. Verfahren zur Herstellung einer Kochwurst nach Anspruch 17, **dadurch gekennzeichnet, dass** dem Brät faserhaltige Stoffe zugegeben werden.

19. Verfahren zur Herstellung einer Rohwurst nach wenigstens einem der Ansprüche 1 bis 7, **dadurch gekennzeichnet, dass** das Muskelfleisch in einem Anfangszustand zu Brät verarbeitet wird, in welchem maximal 50% des im Muskelfleisch enthaltenen Wassers gefroren ist.

20. Verfahren zur Herstellung einer Rohwurst nach Anspruch 19, **dadurch gekennzeichnet, dass** die Temperatur des Muskelfleischs zu Beginn der Brätherstellung in einem Bereich zwischen -2° C und 5° C liegt.

21. Verfahren nach einem der vorhergehenden Ansprüche, **dadurch gekennzeichnet, dass** das gesamte Eis zu Beginn der Brätherstellung zugegeben wird.

22. Wurstwaren wie Rohwürste, Brühwürste, Kochwürste oder Kochstreichwürste, **dadurch gekennzeichnet, dass** sie nach einem Verfahren nach einem oder mehreren der vorhergehenden Ansprüche hergestellt sind.
